# EUROPEAN PATENT SPECIFICATION

(11) **EP 0 774 103 B1**
(45) Date of publication and mention of the grant of the patent: **30.09.1998**
(21) Application number: 95925836.9
(22) Date of filing: 04.07.1995
(51) Int. Cl.: F28F 9/02

(54) **APPARATUS FOR COOLING HOT GAS**
VORRICHTUNG ZUR KÜHLUNG VON HEISSEM GAS
APPAREIL DE REFROIDISSEMENT DE GAZ CHAUDS

(30) Priority: 05.07.1994 EP 94201937
(43) Date of publication of application: 21.05.1997
(73) Proprietor: SHELL INTERNATIONALE RESEARCH MAATSCHAPPIJ B.V., 2596 HR Den Haag (NL)
(72) Inventor: BOSCH, Sjoerd, NL-2596 HR The Hague (NL); PAAUW, Theodoor, Teunis, Abraham, NL-2596 HR The Hague (NL); VAN POPELE, Eduard, Gerardus, Lodewijk, NL-2596 HR The Hague (NL)
(86) International application number: EP9502610
(87) International publication number: WO9601403

(56) References cited:
- DE-C- 3 715 713
- FR-A- 2 005 156
- FR-A- 2 269 050
- FR-A- 2 284 851
- FR-A- 2 424 500

## Description

The invention relates to an apparatus for cooling hot gas which apparatus comprises a vessel provided with one or more heat exchanging tubes, the hot gas flowing through the said tube(s) and a cooling medium (e.g. water) flowing round the said tubes and the tubes being mounted at least at one end in a tube plate.

Such heat exchange devices are used on a large scale in many branches of industry, e.g. in the petroleum industry for cooling products obtained from hydrocrackers and reactors for partial oxidation of (hydro)carbon-containing fuels such as oil and coal and the like.

In FR-A-2424500 an apparatus for cooling hot gas is disclosed wherein the flow of the cooling medium and the hot gas are concurrent. In FR-A-2005156 a tube plate is disclosed for cooling hot gases wherein the cooling medium is directed in an outer countercurrent flow.

When for cooling purposes the hot gases are passed through tubes which are cooled with a cooling medium on the outside, the walls of the tubes acquire a high temperature owing to transfer of heat from the hot gases to the tube metal which heat is further transmitted to the cooling medium. Advantageously, for reasons of space saving helically coiled tubes are applied.

Dependent on the field of application, technical problems of different nature are met.

E.g. the cooling of hot gases obtainable from the gasification of (hydro)carbon-containing fuel, in which the presence of small solid particles is unavoidable, involves serious heat transfer problems and erosion/corrosion problems.

For example, hot synthesis gas produced by partial oxidation of (hydro)carbon-containing fuel is generally cooled in a heat exchanger located next to the gasifier thereby producing high pressure steam. A critical area is the gas inlet of the heat exchanger where the hot synthesis gas enters the heat exchange area. The wall thickness of the inlet area is to be minimised but should be thick enough to ensure mechanical integrity based on pressure and thermal loads. The gas velocity at the inlet area should be sufficiently high to prevent fouling (say 12 m/s) but on the other hand low enough to ensure sufficiently low gasside heat transfer coefficients. In particular, obtaining an optimum between fouling and velocity is desirable.

The heat exchange inlet area is subject to overheating (high heat fluxes) and high temperature corrosion phenomena.

High temperature corrosion phenomena e.g. metal dusting and sulphidation are known as such to those skilled in the art and will therefore not be described in detail. Generally, it can be said that metal dusting is a corrosion attack in carbonaceous atmospheres with low H₂S concentrations at temperatures in the range of 500-900 °C.

Further, it has appeared that in carbonaceous atmospheres with high sulphur contents sulphidation attack occurs. In particular, it has appeared that corrosion phenomena like metal dusting and sulphidation restrict equipment lifetime.

It is therefore an object of the present invention to provide a heat exchanger comprising a specific inlet section for better defined cooling and improved equipment lifetime and improved reliability.

The invention therefore provides an apparatus for cooling hot gas comprising a vessel provided with an inlet for hot gas and an outlet for cooled gas, at least a heat exchange tube defining a gas passage through a cooling medium compartment arranged within the said vessel and said tube(s) being mounted at least at or near its (their) upstream end(s) in a tube plate which closes the said cooling medium compartment of said vessel, thus forming a tube inlet section, wherein the tube plate at its upstream end is provided with a means for cooling the tube inlet section, in such a manner that the flow of cooling medium along the outer wall(s) of the gas passage(s) is in counter current to the gas flow(s) through the said gas passage(s).

Advantageously, the means for cooling the tube inlet section comprises a cooling medium inlet and cooling medium outlet and defines a closed space between said cooling medium inlet and said cooling medium outlet at the upstream end of the tube plate, and further comprises a means for directing the flow of cooling medium from the said cooling medium inlet along the outer wall of the said gas passage(s).

According to the invention the cooled inlet section reduces the occurrence of the above erosion/corrosion phenomena, in particular, sulphidation and metal dusting are reduced by keeping the metal temperatures at the inlet section sufficiently low, say below 400 °C.

The invention will now be described by way of example in more detail by reference to the accompanying drawings, in which:
fig. 1 represents schematically a sectional view of a heat exchanger of the invention connected to a reactor;
fig. 2 represents schematically a partial longitudinal section of the heat exchanger of the invention, connected to a reactor; and
fig. 3 represents a sectional view of a detail of fig. 2.

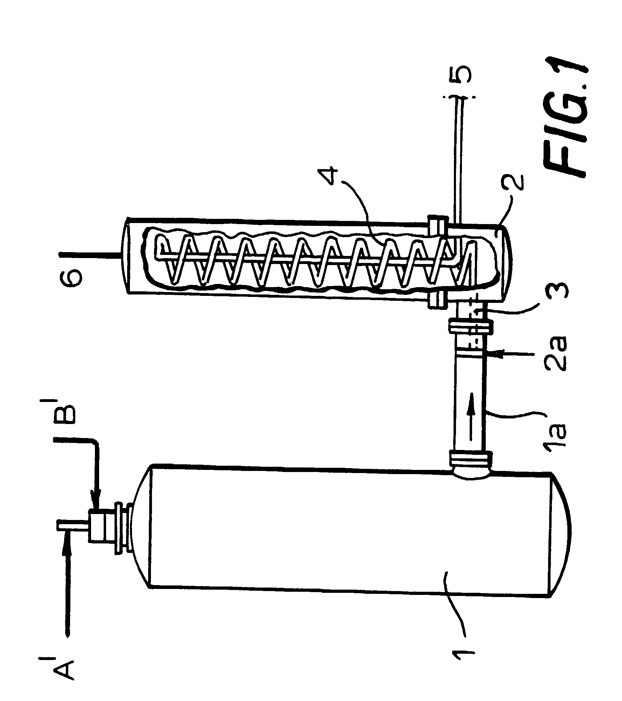

Referring to fig. 1 a reactor 1 is shown for producing product gas e.g. by partial oxidation of hydrocarbon-containing fuel.

The product gas is supplied to a heat exchanger 2 and is further treated in any suitable manner after heat exchange. Such partial oxidation processes and appropriate process conditions are generally known to those skilled in the art and will therefore not be described in detail.

Generally, it can be said that (hydro)carbon-containing fuel A' (optionally with a moderator) and an oxidizer B' (optionally with a moderator) are supplied to the reactor 1 wherein raw hot synthesis gas is produced under appropriate process conditions.

The raw hot synthesis gas is supplied from the reactor 1 via a duct la to the gas inlet of the heat exchanger 2 located next to the reactor.

The arrows A represent the synthesis gas flow direction.

The mechanical connections of reactor and duct on the one side and duct and heat exchanger on the other side are made by means of any connections suitable for the purpose (e.g. flanges) (not shown for reasons of clarity). At the upstream end of the said gas inlet a tube plate 2a which closes the cooling medium compartment of the heat exchanger, comprises at least a tube forming at least one gas passage 3 from the duct la to at least a coil 4 of the heat exchanger 2 which is further provided with a gas outlet 5 and an outlet 6 for steam. Advantageously, the tube plate is flat and comprises 4-10 gas passages. It will be appreciated by those skilled in the art that the tube plate can be located in any manner suitable for the purpose, e.g. in the inlet for hot gas, within the vessel of the heat exchanger or between the reactor and the said inlet for hot gas.

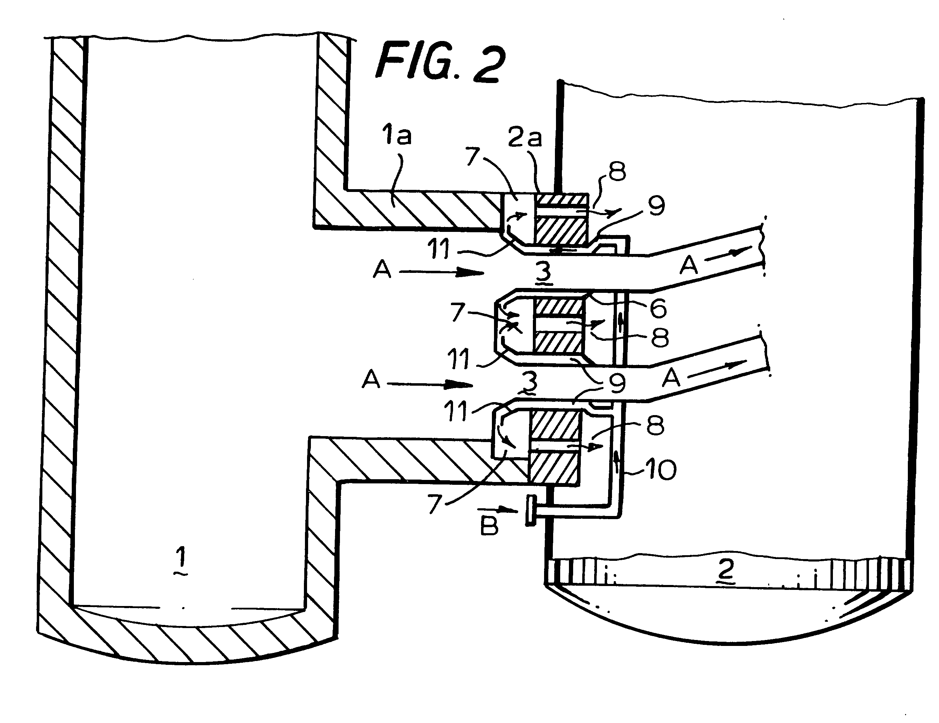

Fig. 2 represents a partial longitudinal section of the apparatus of the invention. The same reference numerals as in fig. 1 have been used. Two gas passages 3 have been shown. The tubes providing the gas passages are suitably mounted at their upstream end in the tube plate 2a which closes the cooling medium compartment of the vessel of the heat exchanger 2.

The tube 2a comprises at its upstream end at least a cooling chamber 7 which is provided with an outlet 8 for cooling medium and an inlet 9 for cooling medium. The inlets 9 receive cooling medium B from a supply line 10. Each cooling chamber 7 comprises a means 11 having any suitable thickness (e.g. about 5-45 mm) for directing the flow of cooling medium from the inlet 9 along the outer wall of the gas passage 3 in such a manner that the inlet section is thoroughly cooled, thus lowering the temperature of the inlet section.
Advantageously, said means 11 is rotation-symmetrical, e.g. a sleeve.

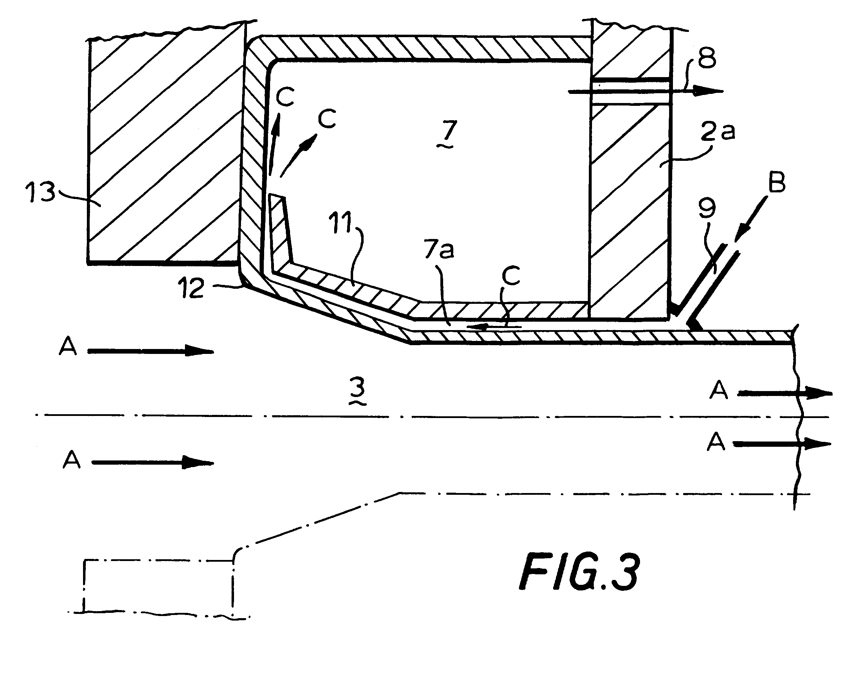

Fig. 3 represents a sectional view (rotation-symmetrical) of the inlet section of a gas passage 3 of fig. 2 in more detail.

The arrows A represent the flow direction of the synthesis gas to the coil(s) of the heat exchanger (not shown for reasons of clarity).

The inlet section is provided with an annular space 7a surrounding the gas passage 3. (For reasons of clarity only part of the inlet section is shown.)

The annular space 7a is communicating at its one side with a cooling medium inlet 9 and at its other side through the cooling chamber 7 and a cooling medium outlet 8 with any means suitable for the purpose e.g. a vaporizer means (not shown for reasons of clarity).

The annular space 7a is provided with the flow directing means 11 (e.g. a sleeve or a baffle) providing an annular slit having a certain width to provide a well defined cooling area. Any suitable cooling medium can be applied e.g. feed water.

The arrows C represent the direction of cooling medium within the said flow direction means 11.

The flow direction of the cooling medium flow is countercurrent to the gas flow through the gas passage 3 forcing the cooling medium to have an intimate contact with the heat exchanger inlet section especially at the knuckle 12. The gas passages have been shown with conical ends. However, it will be appreciated by those skilled in the art that the invention is not restricted thereto.

Further, a heat resistant or erosion-resistant barrier 13 for the remainder of the inlet section is advantageously installed to shield off the high temperature gas flow from the metal parts adjacent to the inlet tubes. It will be appreciated by those skilled in the art that such barrier 13 can have any form suitable for the purpose, e.g. a lining or an insert and the like.

The invention will now be described in more detail by reference to the following example:

### Example

- Process and fuel applied therein:: partial oxidation of a liquid or solid and/or gaseous hydro-carbon containing fuel.
- Partial oxidation pressure:: 0.1-12 MPa
- Temperature:: 1000 °C - 1500 °C
- Typical crude synthesis gas composition %-vol dry:: CO₂ = 1.5 - 9,
H₂S = 0.0 - 1.0,
O₂ = 0.0 - 0.1,
H₂ = 45 - 56,
N₂ = 0.0 - 0.5,
Co = 30 - 49,
CH₄ = 0.05- 0.3,
- Capacities:: 300,000-4,000,000 Nm3/day of crude synthesis gas flow
- Steam pressures:: 0.1-12 MPa,
- Cooling water pressures:: 0.1-12 MPa,
- Cooling water temperatures:: 20 - 250 °C,
- Feed water flow: (used for cooling inlet section): 12,000-180,000 kg/h,
- Water velocity at annular space:: sufficiently high to ensure suitable cooling medium heat transfer coefficients,
- Annular slit width:: 1-6 mm.

Various modifications of the present invention will become apparent to those skilled in the art from the foregoing description. Such modifications are intended to fall within the scope of the appended claims.

## Claims

1. An apparatus for cooling hot gas comprising a vessel (2) provided with an inlet (la) for hot gas and an outlet (5) for cooled gas, at least a heat exchange tube (4) defining a gas passage (3) through a cooling medium compartment arranged within the said vessel and said tube(s) (4) being mounted at least at or near its (their) upstream end(s) in a tube plate (2a) which closes the said cooling medium compartment of said vessel, thus forming a tube inlet section, wherein the tube plate at its upstream end is provided with a means (7) for cooling the tube inlet section, characterized in that the flow of cooling medium along the outer wall(s) of the gas passage(s) is in countercurrent to the gas flow(s) through the said gas passage(s).

2. The apparatus as claimed in claim 1, wherein the said means for cooling the tube inlet section comprises a cooling medium inlet (9) and cooling medium outlet (8) and defines a closed space between said cooling medium inlet and said cooling medium outlet at the upstream end of the tube plate, and further comprises a means (11) for directing the flow of cooling medium from the said cooling medium inlet along the outer wall of the said gas passage(s).

3. The apparatus as claimed in claim 2, wherein the said flow directing means is a baffle or sleeve.

4. The apparatus as claimed in any one of claims 1-3, wherein the tube inlet section is provided with a heat resistant or erosion resistant barrier (13) at its upstream end.

5. The apparatus as claimed in any one of claims 1-4, wherein the tube plate comprises the cooling medium outlet and the cooling medium inlet of said means for cooling the tube inlet section.

6. The apparatus as claimed in claims 2-5, wherein the said flow directing means defines an annular space (7a) surrounding the outer wall(s) of the said gas passage(s).

7. The apparatus as claimed in any one of claims 1-6, wherein the tube plate is flat.

8. The apparatus as claimed in any one of claims 1-7, wherein the tube plate is arranged in the duct (la) connecting a reactor and the said vessel.

9. The apparatus as claimed in any one of claims 1-7, wherein the tube plate is arranged in the inlet for hot gas of said vessel.

10. The apparatus as claimed in any one of claims 1-7, wherein the tube plate is arranged within the said vessel.

## Patentansprüche

1. Vorrichtung zum Kühlen von heißem Gas, mit einem Gefäß (2), das mit einem Einlaß (1a) für heißes Gas und einem Auslaß (5) für gekühltes Gas ausgestattet ist, wobei zumindest ein Wärmetauschrohr (4) einen Gasdurchlaß (3) durch ein Kühlmediumabteil definiert, das im Inneren des Gefäßes angeordnet ist, und das bzw. die Rohr(e) (4) zumindest an oder nahe ihrem (ihren) stromaufwärtigen Ende(n) in einer Rohrplatte (2a) montiert ist (sind), welche das Kühlmediumabteil des Gefäßes abschließt und dadurch einen Rohreinlaßabschnitt bildet, wobei die Rohrplatte an ihrem stromaufwärtigen Ende mit einer Einrichtung (7) zum Kühlen des Rohreinlaßabschnittes ausgestattet ist, dadurch gekennzeichnet, daß die Kühlmediumströmung entlang der Außenwand bzw. -wände des Gasdurchlasses bzw. der Gasdurchlässe im Gegenstrom zu der bzw. den Gasströmung(en) durch den Gasdurchlaß bzw. die Gasdurchlässe ist.

2. Vorrichtung nach Anspruch 1, bei welcher die Einrichtung zum Kühlen des Rohreinlaßabschnittes einen Kühlmediumeinlaß (9) und einen Kühlmediumauslaß (8) aufweist und einen geschlossenen Raum zwischen dem Kühlmediumeinlaß und dem Kühlmediumauslaß am stromaufwärtigen Ende der Rohrplatte definiert, und ferner eine Einrichtung (11) zum Richten der Kühlmediumströmung aus dem Kühlmediumeinlaß entlang der Außenwand des Gasdurchlasses bzw. der Gasdurchlässe aufweist.

3. Vorrichtung nach Anspruch 2, bei welcher die Strömungslenkeinrichtung ein Leitblech oder eine Hülse ist.

4. Vcrrichtung nach einem der Ansprüche 1-3, bei welcher der Einlabschnitt mit einer hitze- oder erosionsbeständigen Barriere (13) an seinem stromaufwärtigen Ende ausgestattet ist.

5. Vcrrichtung nach einem der Ansprüche 1-4, bei welcher die Rohrplatte den Kühlmediumauslaß und den Kühlmediumeinlaß der genannten Einrichtung zum Kühlen des Rohreinlaßabschnittes aufweist.

6. Vorrichtung nach den Ansprüchen 2-5, bei welcher die Strömungslenkeinrichtung einen Ringraum (7a) definiert, welcher die Außenwand bzw. -wände des Gasdurchlasses bzw. der Gasdurchlässe umgibt.

7. Vorrichtung nach einem der Ansprüche 1-6, bei welcher die Rohrplatte flach ist.

8. Vorrichtung nach einem der Ansprüche 1-7, bei welcher die Rohrplatte in der Leitung (la) angeordnet ist, welche einen Reaktor mit dem genannten Gefäß verbindet.

9. Vorrichtung nach einem der Ansprüche 1-7, bei welcher die Rohrplatte im Einlaß für Heißgas des genannten Gefäßes liegt.

10. Vorrichtung nach einem der Ansprüche 1-7, bei welcher die Rohrplatte im Inneren des genannten Gefäßes liegt.

## Revendications

1. Appareil pour le refroidissement de gaz chauds, comportant une cuve (2) dotée d'une entrée (1a) pour les gaz chauds et d'une sortie (5) pour les gaz refroidis, d'au moins un tube d'échange de chaleur (4) définissant un passage pour le gaz (3) à travers un compartiment pour fluide de refroidissement disposé à l'intérieur de ladite cuve, et ledit ou lesdits tubes (4) étant, sur ou à proximité de leur extrémité amont, dans un plateau pour tubes (2a) qui ferme ledit compartiment pour fluide de refroidissement de ladite cuve, pour ainsi former une partie d'entrée de tube, dans lequel le plateau pour tube est doté à son extrémité amont d'un moyen (7) de refroidissement de la partie d'entrée de tube, caractérisé en ce que l'écoulement de fluide de refroidissement le long de la ou des parois extérieures du ou des passages pour le gaz est à contre-courant du ou des écoulements de gaz à travers ledit ou lesdits passages pour le gaz.

2. Appareil selon la revendication 1, dans lequel ledit moyen de refroidissement de la partie d'entrée de tube comporte une entrée (9) pour fluide de refroidissement et une sortie (8) pour fluide de refroidissement et définit un espace fermé entre ladite entrée de fluide de refroidissement et ladite sortie pour fluide de refroidissement à l'extrémité amont du plateau pour tube, et comporte en outre un moyen (11) pour orienter l'écoulement du fluide de refroidissement provenant de ladite entrée de fluide de refroidissement le long de la paroi extérieure dudit ou desdits passages pour le gaz.

3. Appareil selon la revendication 2, dans lequel ledit moyen d'orientation de l'écoulement est une chicane ou un manchon.

4. Appareil selon l'une quelconque des revendications 1 à 3, dans lequel la partie d'entrée du tube est dotée à son extrémité amont d'une barrière (13) résistant à la chaleur ou résistant à l'érosion.

5. Appareil selon l'une quelconque des revendications 1 à 4, dans lequel le plateau pour tubes comporte la sortie pour le fluide de refroidissement et l'entrée de fluide de refroidissement dudit moyen de refroidissement de la partie d'entrée de tube.

6. Appareil selon les revendications 2 à 5, dans lequel ledit moyen d'orientation de l'écoulement délimite un espace annulaire (7a) qui entoure la ou les parois extérieures dudit ou desdits passages pour le gaz.

7. Appareil selon l'une quelconque des revendications 1 à 6, dans lequel le plateau pour tubes est plat.

8. Appareil selon l'une quelconque des revendications 1 à 7, dans lequel le plateau pour tubes est agencé dans le conduit (la) reliant un réacteur et ladite cuve.

9. Appareil selon l'une quelconque des revendications 1 à 7, dans lequel le plateau pour tubes est agencé dans l'entrée des gaz chauds de ladite cuve.

10. Appareil selon l'une quelconque des revendications 1 à 7, dans lequel le plateau pour tubes est agencé à l'intérieur de ladite cuve.
